# EUROPEAN PATENT SPECIFICATION

(11) **EP 2 855 117 B1**
(45) Date of publication and mention of the grant of the patent: **18.07.2018**
(21) Application number: 12877736.4
(22) Date of filing: 30.05.2012
(51) Int. Cl.: B29C 64/165, B29C 70/68

(54) **METHOD AND DEVICE FOR LAYER-BY-LAYER FORMING AN OBJECT**
VERFAHREN UND VORRICHTUNG ZUR SCHICHTWEISEN HERSTELLUNG EINES OBJEKTS
PROCÉDÉ ET DISPOSITIF DE FORMATION D'UN OBJET COUCHE PAR COUCHE

(43) Date of publication of application: 08.04.2015
(60) Divisional application: 18153116.1
(73) Proprietor: L3F Sweden AB, 545 93 Töreboda (SE)
(72) Inventor: EDVINSSON, Jerry, S-545 93 Töreboda (SE)
(74) Representative: Valea AB
(86) International application number: PCT/SE2012/050577
(87) International publication number: WO 2013/180609

(56) References cited:
- EP-A2- 0 950 502
- WO-A1-03/035353
- WO-A1-2005/070657
- WO-A1-2006/033621
- WO-A1-2006/033621
- WO-A1-2006/091842
- DE-A1- 19 942 071
- DE-A1- 19 942 071
- US-A- 4 058 580
- US-A1- 2002 062 909
- US-A1- 2008 156 429
- US-B1- 6 814 823

## Description

### TECHNICAL FIELD

Embodiments herein relate to a method for layer-by-layer forming an object, and to a device for layer-by-layer forming an object.

### BACKGROUND

Some methods and devices use layering techniques to build three-dimensional objects. The methods may comprise application of several layers of bulk material in a layer-by-layer fashion, wherein adjacent layers of bulk material are bonded together by means of a binding agent, so as to form a continuous product, i.e. an object.

Methods and devices for three-dimensional printing according to the above description may be to manufacture objects for visualization, demonstration and mechanical prototyping.

The international patent application no. WO 2006/091842 A1 discloses a core-shell free forming method and apparatus. The method includes the steps of spreading a reactive powder on a substrate, selectively dispensing a core binder and thereafter selectively dispensing a shell binder. The method binder material to provide strength to the prouct.

However, there remains a need to provide methods and devices which can be used for manufacturing large objects and for three-dimensional layer-by-layer building of functional objects fulfilling higher requirements regarding structural strength than what is needed for objects used for visualization or prototyping.

### SUMMARY

Embodiments herein aim to provide an improved method and an improved device for layer-by-layer form an object. The invention is defined by the combination of features of method claim 1.Claim 7 defines a device which implements the method of claim 1. According to a first aspect, this is achieved by means of a method for layer-by-layer forming an object, which method comprises the steps of distributing a layer of bulk material, applying a binding agent, applying at least one reinforcing element onto the layer of bulk material or binding agent, wherein the reinforcing element is adapted to structurally reinforce the object. The steps of distributing a layer of bulk material, applying a binding agent and applying at least one reinforcing element are alternately repeated a desired number of times to form the object. Adjacent layers of bulk material are bonded by means of the binding agent.

The provision of at least one reinforcing element ensures that large objects can be manufactured by means of layer-by-layer free forming techniques from a digital file, or digital code, while maintaining a sufficient structural strength. Such techniques can be three-dimensional printing, SLA or SLS for example. The objects can therefore be used as functional objects and not only as visualization objects or prototypes. A layer-by-layer forming of an object are generally also referred to as an additive process in which a layer is added onto another layer to form the object, while redundant material (if any) is removed.

According to an embodiment of the first aspect, the step of applying at least one reinforcing element comprises applying the at least one reinforcing element in a pattern. Thereby, a suitable reinforcing effect may be achieved in a simple way.

According to an embodiment of the first aspect, the step of applying at least one reinforcing element comprises applying a pattern of a plurality of elongated reinforcing elements. Thereby, application of the reinforcing elements may be accomplished in a structured and easily adaptable way.

According to an embodiment of the first aspect, the elongated reinforcing elements are applied in a straight lines pattern, an arc shape pattern, a wave form pattern, an irregularly formed pattern, a spiral pattern or in combinations thereof.

According to an embodiment of the first aspect, the elongated reinforcing elements extend substantially parallel to each other.

According to the invention, the step of applying at least one reinforcing element comprises applying a reinforcing element in the form of a string.

According to an embodiment of the first aspect, the at least one reinforcing element is made from at least one of a carbon fiber based material, a metal based material, a thermoplastic material, a glass fiber based material, or an equivalent material.

According to an embodiment of the first aspect, the step of applying at least one reinforcing element comprises extruding at least one string shaped reinforcing element by means of at least one nozzle.

According to an embodiment of the first aspect, the step of applying at least one reinforcing element comprises feeding of a prefabricated reinforcing element.

According to an embodiment of the first aspect, the bulk material is a wood powder or a polymeric material such as a thermoplastic material.

According to an embodiment of the first aspect, the object is a building element, a piece of furniture, a decoration object or the like.

According to a third aspect of the solution the objective is achieved by means of a device for layer-by-layer forming an object of bulk material, as defined in claim 7. The device comprises a bulk material distributing unit for distributing a layer of bulk material, a binding agent applying unit for applying a binding agent, a reinforcing element applying unit for applying at least one reinforcing element onto the layer of bulk material or binding agent, wherein the reinforcing element is adapted to structurally reinforce the object.

The benefits and advantages of the second and third aspects of the solution correspond to the benefits and advantages of the first aspect.

### BRIEF DESCRIPTION OF THE DRAWINGS

In the following, non-limiting embodiments herein will be described in greater detail with reference to attached drawings, in which;
fig. 1 is shows a flow chart illustrating a method according to embodiments herein;
fig. 2 is a schematic view of a device for layer-by-layer forming an object according to embodiments herein;
fig 3 is a schematic view of a feeding unit for feeding a reinforcing element;
fig. 4 shows the feeding unit of figure 3 in greater detail;
fig. 5 shows a second embodiment of a suitable feeding unit for feeding a reinforcing element;
fig. 6 shows a layer-by-layer formed object reinforced roof truss and;
fig. 7 shows a cross section of the roof truss of figure 6.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### DETAILED DESCRIPTION OF PREFERRED EMBODIMENTS

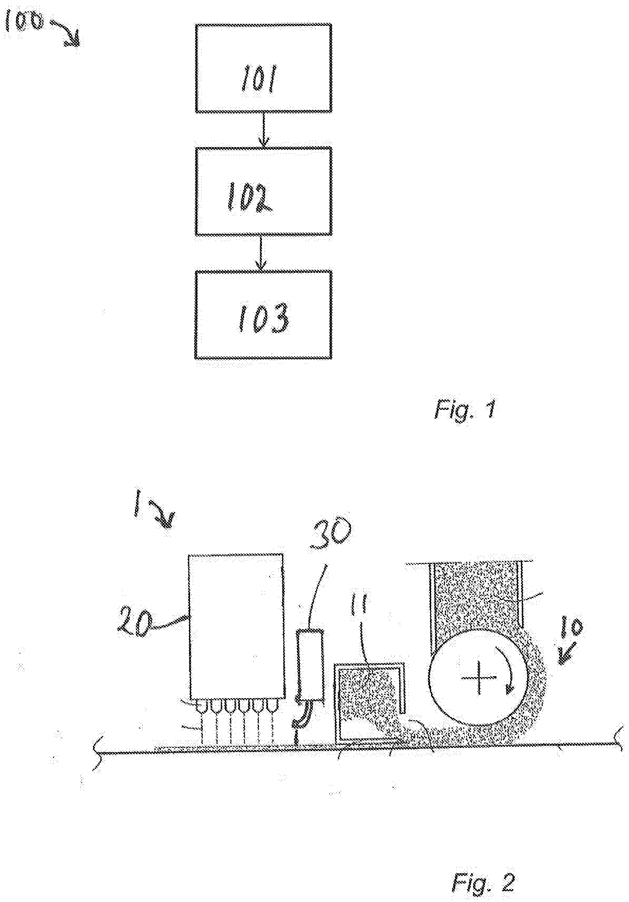

Fig. 1 schematically illustrates method steps of a method 100 according to non limiting embodiments herein, figure 2 shows schematically a device 1 for printing. The basic configuration and usage of the device according to embodiments herein generally correspond to the configuration and usage of the layer-by-layer forming device disclosed in WO2006033621 A1. The device according to embodiments herein further comprises a reinforcing element unit 30 for application of reinforcing elements.

The illustrated method comprises the step of distributing 101 a layer of bulk material. This first layer of bulk material may be distributed onto a support surface. The bulk material may be distributed from a bulk material applying unit 10 of the device 1 used for printing. The bulk material in this case is wood powder. A bulk material layer having a thickness in the interval 0.1-5 mm may be distributed. Other layer thicknesses may be applied.

To some extent, the layer thickness determines the accuracy of the manufactured product, and is also related to a particle size of the bulk material in such a way that the smaller the particle size is, the smaller the achievable layer thickness is. Accordingly, the choice of particle size and layer thickness influences the accuracy of the product. Both tolerances and surface finish of the object can be controlled by choice of particle size and layer thickness. As the particle size can be said to be the factor primarily determining the resolution of the product, it is often advisable to filter the bulk material e.g. if it consists of a wood powder, in order to minimize the variation in particle size. For many products, a particle size in the size interval 0.01-5 mm, and preferably of the order of 0.1-2 mm, can be used when forming the wood powder layers. If, for example, a particle size of 1 mm is chosen, it can be ensured by means of filtration, sometimes referred to as sieve analysis, that the particles in one and the same powder has a size which does not exceed, for example, 1.2 mm, and a size which does not fall below, for example, 0.8 mm.

Different arrangements may be used to adapt the thickness of the bulk material layers. According to an embodiment, the device for for layer-by-layer forming the object comprises a scraper 11 for removing excessive bulk material, for the purpose of obtaining the desired layer thickness. As an alternative to a scraper, or in combination with a scraper, a rotating brush can be used to remove excessive bulk material by means of brushing, so that the desired layer thickness is obtained. There is also a possibility to arrange a suction device for sucking up and transporting away excessive bulk material.

The method also comprises the step of applying 102 a binding agent. The binding agent may be applied by means of a binding agent applying unit 20. In the shown embodiment is a nozzle arrangement used comprising six individual rows of nozzles, each row comprising a selected number of nozzles, in this case 10 nozzles. Optionally or additionally, of a binding agent, if a suitable solid bulk material is used it may suffice to simply melt the bulk material to bind each layer together, optionally if a liquid bulk material is applied, it may be suffice to cure, or harden, the bulk material. Melting and curing can be done in a wide variety of ways, e.g. via laser, IR light source, heat or cooling elements using convection as primary heat transfer principle, or the like.

According to an advantageous embodiment of the method, binding agent is applied onto selected portions of a bulk material layer in order to form a specific geometry of the object by means of distribution of binding agent. In the production, the portions where binding agent has been deposited will form the product, while remaining portions of the bulk material layers will remain unbonded, and thus not contribute to the finished product. However, before it is removed, the unbonded material can constitute a support for object during its manufacture.

However, if a relatively simple object, for example one exhibiting a constant cross-section, is to be manufactured, one variant of the method could be that the shape of a receptacle in which the object is formed is used for the formation of the delimiting surfaces of the product, so that the object obtains substantially the same shape as the receptacle. This implies that bulk material and binding agent can be applied across the entire surface of the support. It would also be possible to apply bulk material onto selected portions of the support in order to form a specific geometry of the object by means of distribution of bulk material.

The method can be carried out such that each layer is allowed to dry before the next layer is applied. If a faster process is desired, one or several layers of bulk material can be applied before the binding agent which has been deposited onto the immediately preceding layer has dried completely. In such a case, the bulk material can be heated in order to reduce the drying time for the binding agent, for example by means of preheating the bulk material before laying out the bulk material in layers.

The method also comprises the step of applying 103 at least one reinforcing element onto the layer of bulk material or binding agent using a reinforcing element applying unit 30. The at least one reinforcing element may be applied onto the layer of bulk material before application of the binding agent. Alternatively the at least one reinforcing element is applied onto the layer of bulk material after application of the binding agent, and/or simultaneously as the bulk material or the binding agent.

The above described steps of distributing 101 a layer of bulk material, applying 102 a binding agent and applying 103 at least one reinforcing element are alternately repeated a desired number of times to form the selected object. Adjacent layers of bulk material are bonded by means of the binding agent.

According to embodiments herein, a bulk material, a binding agent and at least one reinforcing element are used for layer-by-layer forming an object. The bulk material may be a wood powder. The expression wood powder refers to a powder made of a wood material. Different tree species, such as pine, spruce, birch or others, and different forms of wood originating from branches, trunk, stumps or roots of trees or in the form of wood waste, can be used as a starting material for producing the powder. The particles of the powder can exhibit different shapes and sizes. The particle size can be from relatively small, so that the wood powder obtains a flour-like consistency, to relatively large, implying that the individual particles can be distinguished at a visual inspection. Advantageously, however, the particles of a given powder are substantially of the same size in order to obtain a uniform quality of the final product. Examples of suitable materials are wood chips originating from machining of homogenous wood, such as sawdust, cutter shavings, or the like.

The use of a wood powder as a bulk material may be advantageous since wood powder can be produced at a low cost, from an easily accessible raw material (wood). The usage of wood powder may even imply that material considered as waste material becomes useful. Furthermore, wood powder is biodegradable and can be used to manufacture biodegradable and thereby environmentally friendly objects.

Optionally or additionally, the bulk material may be a polymeric material. Examples of suitable polymeric materials include thermoplastic materials such as polyethylene, polypropylene, polyurethane, ABS, or similar, mixtures thereof are also possible. A variety of thermoplastic materials are available, with different characteristics regarding strength, density, resistance to water etc. It is therefore likely to find a thermoplastic material having characteristics which are advantageous for for layer-by-layer forming an object of different large functional objects.

The bulk material may also be other particulate materials comprising metals, such as brass, copper, aluminium, iron or mixtures thereof.

The bulk material can be applied in solid form or in liquid form or in combinations thereof.

Different types of binding agents may be used. The useful binding agents have in common that they are capable of bonding together the powder, or particles, in the bulk material so that a desired strength of the object can be achieved. The binding agent can be water-based, but the binding agent is suitably water resistant. Whether the binding agent should be water resistant or not, however, depends on the object which is to be manufactured and possible post-treatments of the product. One suitable binding agent is wood glue, but also a hot melt adhesive, for example a plastic-based one, which is heated during application could be used. Most wood glues which are present on the market have the advantages of being relatively cost efficient and easy to handle, environmentally friendly and particularly suited for bonding wood materials.

The binding agent can also be applied as two or more individual components which together form a binding agent, e.g. via a chemical reaction between the two or more components.

The concentration or dilution of the binding agent (water content if a water-based binding agent is concerned) can be varied. Thereby, also the moisture content of the used bulk material has a certain importance, since the total amount of moisture originating from the powder and the binding agent has to be capable of at least wetting the material to the desired extent in order to enable bonding of selected portions of the bulk material layers. The moisture content of the bulk material should also be adapted in order to give the bulk material properties making the bulk material easy to work when being laid out in layers.

According to embodiments herein, at least one reinforcing element, adapted to structurally reinforce the layer-by-layer formed object, is applied onto a previously provided layer of bulk material and/or binding agent using reinforcing element applying unit 30, as seen in figure 2. A variety of materials may be used to manufacture suitable reinforcing elements. According to an embodiment, a reinforcing element is made from nylon. It may be advantageous to use nylon for manufacturing of the reinforcing element since nylon is light weight and yet strong. Furthermore, reinforcing elements made from nylon may be shaped as thin strings having various cross sectional shapes. Nylon strings may be arranged in a variety of different configurations and patterns, such that the resistance tensile strength of an object manufactured according to methods herein may be adapted according to specific requirements. Other suitable materials to be used in reinforcing elements are carbon fiber based materials, glass fiber based materials, thermoplastic materials, and metal based materials.

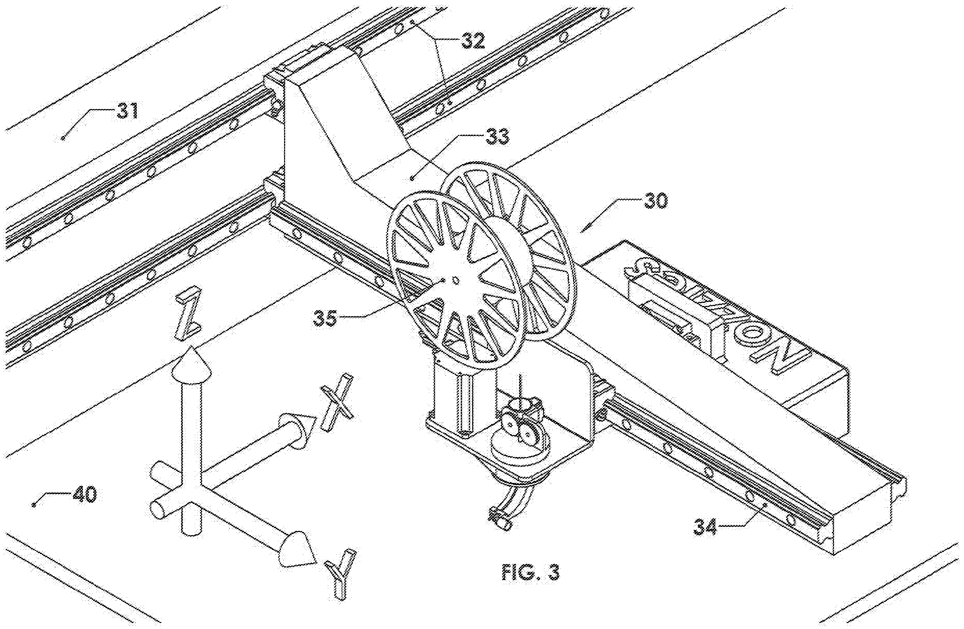

Figure 3 shows the reinforcing element applying unit 30 in greater detail. Figure 3 shows a support surface 40 onto which the bulk material can be distributed. The the reinforcing element applying unit 30 is slideably connected to a frame 31 on sliding tracks 32, for distribution in a longitudinal direction, or along an X-axis, via an arm 33. The arm 33 further comprises sliding tracks 34 which enables the the reinforcing element applying unit 30 to slide along the arm 33 and a transverse direction, along a Y axis. By repeatedly applying bulk material, binding agent and reinforcing elements, the layer-by-layer formed object is printed, or built, in a height direction, along a Z axis, as indicated in figure 3. In the shown embodiment, a thin nylon string is applied using the the reinforcing element applying unit 30. The nylon string is wound about a reel 35 and applied as a continuous string.

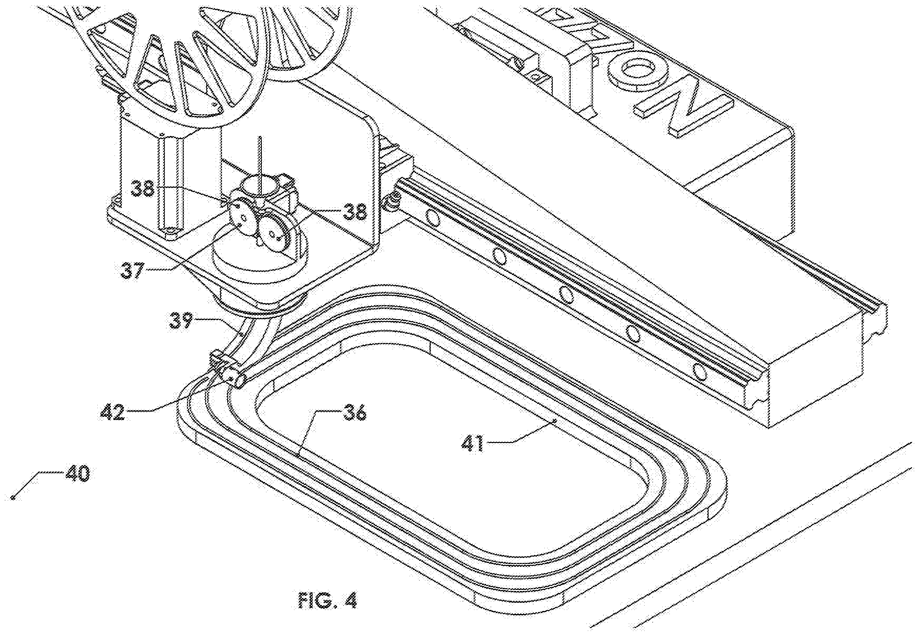

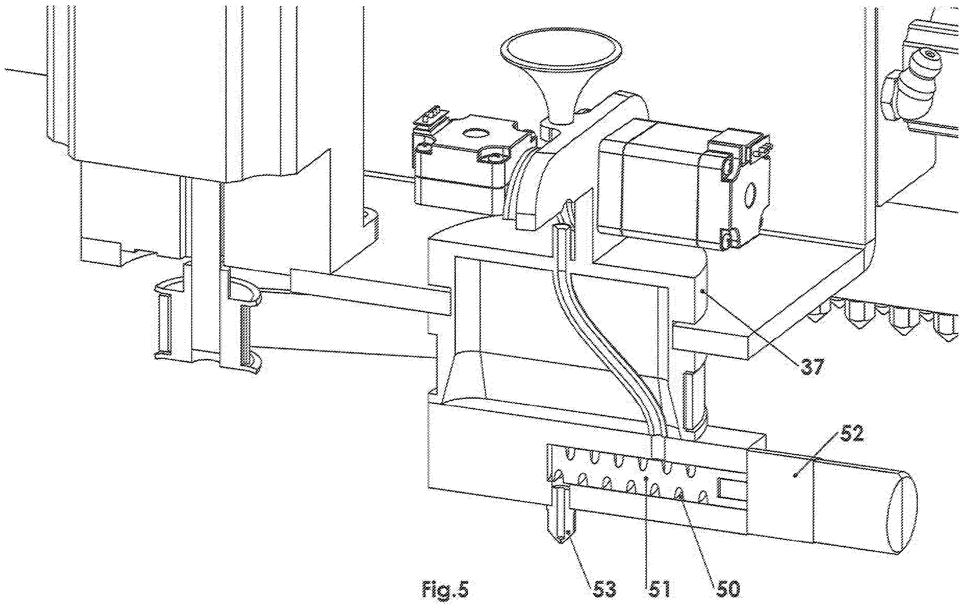

Figure 4 shows the the reinforcing element applying unit 30 in greater detail. Figure 4 shows the support surface 40, a bulk material layer 41, a reinforcing element, in this case nylon string 36, applied as a continuous string. Further visible in figure 4 are parts of the reel 35 and a feeding unit 37. The feeding unit 37 is formed by two opposing wheels 38 which can rotate to feed an appropriate length of the nylon string 36 from the reel 35. A rotatable nozzle 39 comprising a cutter 42 enables a wide variety of patterns to be applied onto the bulk material. The feeding unit 37 is modular and can be replaced with any other suitable feeding unit such as the feeding unit shown in figure 5 for example. As is notable, the rotatable nozzle 39 permits the reinforcing element to be applied in a selected and desired pattern, and if desirable, to follow any contour or form of the object which is formed. According to an aspect, the reinforcing element can be applied via a rotateable nozzle, preferably rotatable 45 degrees or more, more preferably 90 degrees or more, about the Z axis.

Figure 5 shows a feeding unit 37 using extrusion technique. A string, of e.g. polyethylene, can be fed into a chamber 50 comprising a screw 51 which is rotated by an electrical motor 52. The chamber 50 is heated so that the plastic is melted, and as the pressure builds up in the chamber 50 via the screw 51, the melted material can be extruded through an orifice 53 onto a selected area which is intended to be reinforced.

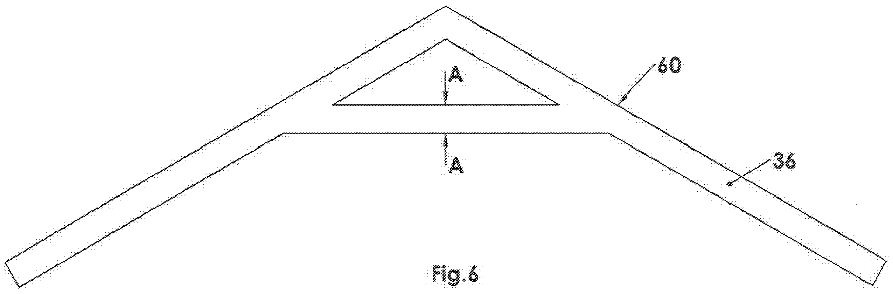

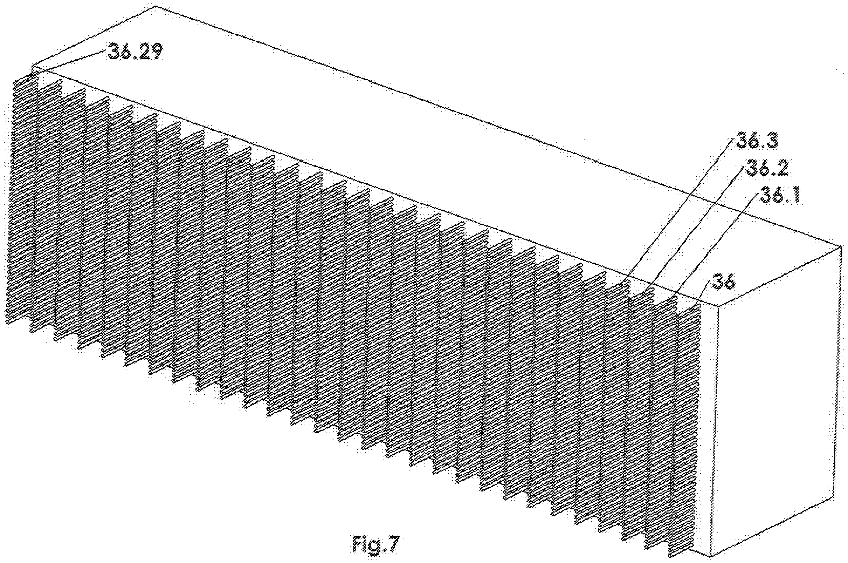

Figure 6 shows a layer-by-layer formed object in the form of a roof truss 60, sometimes referred to as roof frame. A plurality of reinforcing elements in the form of nylon strings 36 are applied along the different lengths of the roof truss 60, one or more strings can be applied in one stroke, i.e. one movement of the feeding unit 37 along the X axis for example. Figure 7 shows a schematic cross section along the line A-A in figure 6. Figure 7 shows how the bulk material, in the form of wood powder, has formed a continuous material together with the binding agent, in this case wood glue, so that substantially no distinct layers of bulk material can be seen in the layer-by-layer formed object. A plurality of nylon string rows 36.1, 36.2, 36.3...36.29 (...36.n), etc, are visible. In this case about 29 rows of nylon strings with almost 45 nylon strings 36 in each row. As is understood, the layer-by-layered formed object, in this case a roof truss, is readily reinforced.

According to an embodiment, the at least one reinforcing element is applied in a predefined pattern onto a layer of bulk material and/or binding agent. The pattern may form a reinforcing element layer. In figure 7, the reinforcing elements, in this case nylon strings 36, are applied in parallel lines to form a row. One row for each layer bulk material is possible. In some case it may be suitable to have two layers of bulk material and one layer of reinforcing elements. Other suitable relationships which can be used are; 10:1, 9: 1, 8:1, 7:1, 6:1, 5:1, 4:1, 3:1, 2:1, 1:1, 1:2, 1:3, 1:4, 1:5, 1:6, 1:7, 1:8, 1:9, 1:10 (layer(s) of bulk material / layer(s) of reinforcing element). The relationship can optionally be from 10:1-1:10, optionally from 20:1-1:20.

The at least one reinforcing element is preferably elongated. According to the embodiment shown in figures 6-7, the reinforcing element is a nylon string having a radius of about 0.2 mm. According to another embodiment, a reinforcing element can have a radius of about 0.05-1 mm. According to yet another embodiment, a reinforcing element has a radius of about 0.1-0.8 mm.

The reinforcing element may extend continuously between opposite ends of a bulk material layer, as shown in figure 6. Thus, a reinforcing element may have a length of several meters if a large object, such as a building element is to be manufactured by means of a method according to embodiments herein. If the reinforcing element is applied in a pattern, e.g. a spiral pattern, the reinforcing element can have a length of at least 120 %, advantageously 150 %, of the length of the object, or optionally/additionally the length of the stroke of the device used for layer-by-layer forming an object.

According to an embodiment, several elongated reinforcing elements, at least to, define a pattern which constitutes a reinforcing element layer. According to some embodiments, several elongated reinforcing elements are applied so as to extend substantially parallel. According to an embodiment, a plurality of reinforcing elements can be applied an overlapping manner so as to form an elongated strip. The step of applying at least one reinforcing element may comprise extruding at least one string shaped reinforcing element by means of at least one nozzle. Alternatively the step of applying at least one reinforcing element comprises feeding of a prefabricated reinforcing element.

Objects manufactured by means of methods and devices according to embodiments herein include pieces of furniture, building elements, decoration objects and equivalent kinds of objects.

Suitable pieces of furniture may be shelves, tables, chairs etc. Layer-by-layer forming pieces of furniture according to embodiments herein involves new possibilities to manufacture objects which are individually designed by each client. Pieces of furniture are suitable for usage and not only for visualization may be manufactured by means of a method and device according to embodiments herein. Building elements which may be manufactured by means of methods and devices according to embodiments herein include roof trusses, crossbars, whole house sections, such as one outer wall section, etc. Thanks to the method and device according to embodiments herein, objects, such as different building elements, may be made-to-measure, according to the needs of each individual client or application. The building elements may be manufactured as integral pieces without joints, which is favourable to the tensile strength etc. Furthermore, the manufacturing process may be automatized since the device used for layer-by-layer forming an object may print, or build, the object autonomously.

## Claims

1. A method for layer-by-layer forming of an object, the method comprising the steps of:
distributing (101) a layer of bulk material; applying a binding agent (102) the method further comprises the steps of; applying (103) at least one reinforcing element onto the layer of bulk material or binding agent, wherein the reinforcing element is adapted to structurally reinforce the object; wherein the reinforcing element is applied through at least one nozzle (39, 53); wherein the steps of distributing (101) a layer of bulk material, applying a binding agent (102) and applying (103) at least one reinforcing element are alternately repeated a desired number of times to form the object, and
wherein adjacent layers of bulk material are bonded together by means of the binding agent, **characterized in that**
said step of applying at least one reinforcing element comprises extruding at least one string shaped reinforcing element by means of the at least one nozzle (53) or wherein the step of applying at least one reinforcing element comprises feeding of a prefabricated reinforcing element in the form of a continuous string of nylon or carbon fiber based materials, glass fiber based material, thermoplastic materials, and metal based materials, by means of a rotatable nozzle.

2. The method according to claim 1, wherein the reinforcing element may be applied onto the layer of bulk material before application of the binding agent, after application of the binding agent, and/or simultaneously as the bulk material or the binding agent.

3. The method according to claim 1 or 2, wherein the binding agent is applied onto selected portions of the bulk material in order to form a specific geometry of the object by means of distribution of the binding agent.

4. The method according to any of the preceding claims wherein the step of applying (103) at least one reinforcing element comprises applying a pattern of a plurality of elongated reinforcing elements, preferably; the elongated reinforcing elements are applied in a straight lines pattern, an arc shape pattern, a wave form pattern, an irregularly formed pattern, a spiral pattern or in combinations thereof.

5. The method according to claim 4, wherein the elongated reinforcing elements extend substantially parallel to each other.

6. The method according to any of the preceding claims, wherein the bulk material is a wood powder or a polymeric material such as a thermoplastic material.

7. A device for layer-by-layer forming an object of a bulk material, the device comprising:
a bulk material distributing unit (10) for distributing a layer of bulk material,
a binding agent applying unit (20), wherein the device further comprises a reinforcing element applying unit (30) for applying at least one reinforcing element onto the layer of bulk material or the binding agent, wherein the reinforcing element is adapted to structurally reinforce the object, wherein the reinforcing element applying unit (30) comprises at least one nozzle (39, 53) for applying the at least one reinforcing element, wherein said device is adapted to perform the method according to any one of the claims 1 to 6.

## Patentansprüche

1. Verfahren zur schichtweisen Herstellung eines Objekts, wobei das Verfahren die folgenden Schritte umfasst: Verteilen (101) einer Schicht von losem Material; Auftragen eines Bindemittels (102), wobei das Verfahren weiter die folgenden Schritte umfasst; Auftragen (103) von zumindest einem verstärkenden Element auf die Schicht von losem Material oder das Bindemittel, wobei das verstärkende Element angepasst ist, um das Objekt strukturell zu verstärken; wobei das verstärkende Element durch zumindest eine Düse (39, 53) auftragen wird; wobei die Schritte des Verteilens (101) einer Schicht von losem Material, des Auftragens eines Bindemittels (102) und des Auftragens (103) von zumindest einem verstärkenden Element abwechselnd eine gewünschte Anzahl oft wiederholt werden, um das Objekt zu formen, und wobei angrenzende Schichten von losem Material durch das Bindemittel untereinander gebunden werden, **dadurch gekennzeichnet, dass**
der Schritt des Auftragens von zumindest einem verstärkenden Element das Extrudieren von zumindest einem strangförmigen verstärkenden Elements durch die zumindest eine Düse (53) umfasst, oder wobei der Schritt des Auftragens von zumindest einem verstärkenden Element das Zuführen von einem vorgefertigten verstärkenden Element in der Form eines fortlaufenden Strangs von auf Nylon oder Kohlenstofffaser basierenden Materialien, auf Glasfaser basierendem Material, thermoplastischen Materialien und auf Metall basierenden Materialien durch eine drehbare Düse umfasst.

2. Verfahren nach Anspruch 1, wobei das verstärkende Element auf die Schicht von losem Material vor dem Auftragen des Bindemittels, nach dem Auftragen des Bindemittels und/oder gleichzeitig mit dem losen Material oder dem Bindemittel aufgetragen werden kann.

3. Verfahren nach Anspruch 1 oder 2, wobei das Bindemittel auf die ausgewählten Abschnitte des losen Materials aufgetragen wird, um durch die Verteilung des Bindemittels eine konkrete Geometrie des Objekts zu formen.

4. Verfahren nach einem der vorstehenden Ansprüche, wobei der Schritt des Auftragens (103) von zumindest einem verstärkenden Element das Auftragen eines Musters einer Vielzahl von vorzugsweise gestreckten verstärkenden Elementen umfasst;
wobei die gestreckten verstärkenden Elemente in einem Muster mit geraden Linien, einen Muster mit Bogenform, einem Muster mit Wellenform, einem unregelmäßig geformten Muster, einem Spiralmuster oder in einer Kombination daraus aufgetragen werden.

5. Verfahren nach Anspruch 4, wobei sich die gestreckten verstärkenden Elemente im Wesentlichen parallel zueinander erstrecken.

6. Verfahren nach einem der vorstehenden Ansprüche, wobei das lose Material ein Holzpulver oder ein Polymermaterial, wie ein thermoplastisches Material ist.

7. Vorrichtung zur schichtweisen Herstellung eines Objekts aus losem Material, wobei die Vorrichtung umfasst:
eine Einheit zum Verteilen von losem Material (10) zum Verteilens einer Schicht von losem Material,
eine Einheit zum Auftragen von Bindemittel (20),
wobei die Vorrichtung weiter eine Einheit zum Auftragen von verstärkenden Elementen (30) zum Auftragen von zumindest einem verstärkenden Element auf die Schicht von losem Material oder das Bindemittel umfasst, wobei das verstärkende Element angepasst ist, um das Objekt strukturell zu verstärken, wobei die Einheit zum Auftragen von verstärkenden Elementen (30) zumindest eine Düse (39, 53) zum Auftragen des zumindest einen verstärkenden Element umfasst, wobei die Vorrichtung angepasst ist, um das Verfahren nach einem der Ansprüche 1 bis 6 auszuführen.

## Revendications

1. Procédé de formation couche par couche d'un objet, le procédé comprenant les étapes de : distribuer (101) une couche de matériau en vrac ; appliquer un agent liant (102), le procédé comprend en outre les étapes de : appliquer (103) au moins un élément de renforcement sur la couche de matériau en vrac ou d'agent liant, dans lequel l'élément de renforcement est adapté à renforcer structurellement l'objet ; dans lequel l'élément de renforcement est appliqué via au moins une buse (39, 53) ; dans lequel les étapes de distribution (101) d'une couche de matériau en vrac, d'application d'un agent liant (102) et d'application (103) d'au moins un élément de renforcement sont répétées alternativement un nombre de fois souhaité pour former l'objet, et dans lequel des couches adjacentes de matériau en vrac sont liées ensemble au moyen de l'agent liant, **caractérisé en ce que**
ladite étape d'application d'au moins un élément de renforcement comprend l'extrusion d'au moins un élément de renforcement en forme de fil au moyen de ladite au moins une buse (53) ou dans lequel l'étape d'application d'au moins un élément de renforcement comprend l'alimentation d'un élément de renforcement préfabriqué sous la forme d'un fil continu de matériaux à base de nylon ou de fibres de carbone, d'un matériau à base de fibres de verre, de matériaux thermoplastiques et de matériaux à base de métal, au moyen d'une buse rotative.

2. Procédé selon la revendication 1, dans lequel l'élément de renforcement peut être appliqué sur la couche de matériau en vrac avant l'application de l'agent liant, après application de l'agent liant et/ou simultanément en tant que matériau en vrac ou agent liant.

3. Procédé selon la revendication 1 ou 2, dans lequel l'agent liant est appliqué sur des parties sélectionnées du matériau en vrac afin de former une géométrie spécifique de l'objet au moyen de la distribution de l'agent liant.

4. Procédé selon l'une quelconque des revendications précédentes, dans lequel l'étape d'application (103) d'au moins un élément de renforcement comprend l'application d'un motif d'une pluralité d'éléments de renforcement allongés, de préférence ; les éléments de renforcement allongés sont appliqués suivant un motif de lignes droites, un motif en forme d'arc, un motif de forme d'onde, un motif formé de manière irrégulière, un motif en spirale ou des combinaisons de ceux-ci.

5. Procédé selon la revendication 4, dans lequel les éléments de renforcement allongés s'étendent sensiblement parallèlement les uns aux autres.

6. Procédé selon l'une quelconque des revendications précédentes, dans lequel le matériau en vrac est une poudre de bois ou un matériau polymère tel qu'un matériau thermoplastique.

7. Dispositif pour former couche par couche un objet en un matériau en vrac, le dispositif comprenant :
une unité de distribution de matériau en vrac (10) pour distribuer une couche de matériau en vrac,
une unité d'application d'agent liant (20),
dans lequel
le dispositif comprend en outre une unité d'application d'élément de renforcement (30) pour appliquer au moins un élément de renforcement sur la couche de matériau en vrac ou l'agent liant,
dans lequel l'élément de renforcement est adapté à renforcer structurellement l'objet, dans lequel l'unité d'application d'élément de renforcement (30) comprend au moins une buse (39, 53) pour appliquer ledit au moins un élément de renforcement, ledit dispositif étant adapté à exécuter le procédé selon l'une quelconque des revendications 1 à 6.
